Europäisches Patentamt

European Patent Office

Office européen des brevets

(11) Numéro de publication: **0 209 439 B1**

## (12) FASCICULE DE BREVET EUROPEEN

(45) Date de publication de fascicule du brevet:
27.11.91

(51) Int. Cl.⁵: **G02F 1/133, G02F 1/137**

(21) Numéro de dépôt: 86401463.4

(22) Date de dépôt: 02.07.86

(54) Dispositif d'affichage électro-optique à cristal liquide.

(30) Priorité: 02.07.85 FR 8510055

(43) Date de publication de la demande:
21.01.87 Bulletin 87/04

(45) Mention de la délivrance du brevet:
27.11.91 Bulletin 91/48

(84) Etats contractants désignés:
CH DE GB IT LI NL SE

(56) Documents cités:
EP-A- 0 100 112
DE-A- 2 617 924
FR-A- 2 260 155
US-A- 4 364 039

PATENTS ABSTRACTS OF JAPAN, vol. 6, no.
38 (P-105)[916], 9 mars 1982; & JP-A-56 155
921

IEEE TRANSACTIONS ON ELECTRON DEVI-
CES, vol. ED-21, no. 5, mai 1974, pages
312,313, New York, US; S. SATO et al.:
"Liquid-crystal color display by DAP-TN
double-layered structure"

PATENTS ABSTRACTS OF JAPAN, vol. 2, no.

17, 6 février 1978, page 10938 E 77; & JP-A-52
133 781

PATENTS ABSTRACTS OF JAPAN, vol. 7, no.
96 (P-193)[1241], 22 avril 1983; & JP-A-58 23
014

ELECTRONICS LETTERS, vol. 11, no. 19, 18
septembre 1975, pages 471,472, Hitchin,
Herts, GB; H.A. TARRY: "Electrically tunable
narrowband optical filter"

(73) Titulaire: REGIE NATIONALE DES USINES RE-
NAULT
Boîte postale 103 8-10 avenue Emile Zola
F-92109 Boulogne-Billancourt(FR)

(72) Inventeur: Gharadjedaghi, Feveydoun
1 bis, rue Casteja
F-92100 Boulogne-Billancourt(FR)

## Description

La présente invention concerne un dispositif d'affichage électro-optique à cristal liquide à anisotropie diélectrique positive ou négative, et utilisant l'effet de la variation de biréfringence, ceci par l'application d'un champ électrique. Cet effet est appelé parfois l'effet de Biréfringence Contrôlée Electriquement (BCE).

Il existe actuellement des dispositifs utilisant cet effet, ces dispositifs étant monocouches c'est-à-dire comprenant un film de cristal liquide emprisonné entre deux plaques de matériau transparent, sur les faces internes desquelles sont disposées en regard les unes des autres, des électrodes. Entre des électrodes, on crée un champ électrique destiné à modifier l'orientation des molécules du cristal liquide pour faire apparaître une information. Dans l'article de F. CLERC, paru dans la revue DISPLAYS October 1981 et intitulé "electro-optical limits of the electrically controlled birefringence effect in nematic liquid crystals", un tel dispositif est décrit avec ses limitations, dans le cas d'un cristal liquide d'anisotropie diélectrique négative. Le cas d'un cristal liquide d'anisotropie diélectrique positive est décrit par S. Matsumoto et al. (Journal of Applied. Physics, Vol. 47, N°9, Sept. 1976) et par J. Fergason (1980 Biennal Displays Revarch Conference).

Dans le cas d'un dispositif du type matriciel, c'est-à-dire comprenant un réseau matriciel d'électrodes, l'adressage électronique est en général du type séquentiel, appelé également multiplexé. Dans ce type d'adressage, on applique séquentiellement (ou successivement) sur les lignes d'électrodes un signal électrique $V_x$ par exemple carré et on applique en parallèle (ou simultanément) sur les colonnes électrodes et pendant l'adressage d'une ligne des signaux électriques carrés $V_y$ qui peuvent être soit en opposition de phase soit en phase avec le signal $V_x$, suivant que l'on désire afficher ou non la zone de cristal liquide correspondant. Le principe de ce type d'adressage, son optimisation ainsi que ses limitations sont décrits par P.M. ALT et P. Pleskko, paru dans le revue IEEE Trans. Elect. Dev, ED-21, 146, 1974. Les principales limitations de ce type d'adressage apparaissent lorsque le taux de multiplexage augmente, c'est-à-dire lorsque la complexité de l'afficheur s'accroît nécessitant un nombre croissant de lignes électrodes. Lorsque le taux de multiplexage augmente, le rapport des tensions efficaces $V_{ON}$ et $V_{OFF}$ correspondant respectivement aux zones activées et non activées diminue et tend vers 1, ce qui entraîne une dégradation du comportement électro-optique du dispositif et notamment de son contraste. De plus l'augmentation de ce taux de multiplexage exige dans la pratique des niveaux de tension de plus en plus élevés, ce qui entraîne l'utilisation des composants électroniques de plus en plus onéreux.

Pour un dispositif du type BCE monocouche, à taux de multiplexage donné et pour des niveaux de tensions donnés, le contraste est amélioré en augmentant l'épaisseur de la couche de cristal liquide. Ceci est dû au fait que la caractéristique contraste-tension présente en chaque point une pente d'autant plus grande que l'épaisseur de la couche de cristal liquide est grande. A contraste donné, le taux de multiplexage peut être augmenté et/ou les niveaux de tensions abaissés lorsque cette épaisseur augmente.

L'inconvénient est que l'augmentation de l'épaisseur de la couche de cristal liquide détériore son comportement dynamique ; en effet pour des tensions $V_x$ et $V_y$ données, les temps de réponse de l'effet électro-optique sont proportionnels au carré de l'épaisseur.

Il est connu qu'une cellule BCE peut permettre l'affichage des informations en couleurs. Sur la caractéristique transmission-tension, l'affichage en noir et blanc correspond à des tensions proches de la tension de seuil de l'effet électro-optique, les couleurs apparaissant vers des tensions plus élevées.

Dans le cas d'un affichage couleur, un dispositif du type BCE à adressage multiplexé nécessite des tensions $V_x$ et $V_y$ plus grandes que dans le cas noir et blanc entraînant d'une façon plus critique l'utilisation de composants électroniques plus onéreux.

On connait des dispositifs d'affichage électro-optique à cristal liquide du type comprenant plusieurs cellules élémentaires constituées chacune par au moins deux plaques transparentes sensiblement parallèles comportant des électrodes transparentes entre lesquelles est emprisonné un cristal liquide, ces cellules étant empilées les unes contre les autres entre deux polariseurs rectilignes situés de part et d'autre des faces externes de l'empilement, au moins le cristal liquide de l'une d'elles présentant un effet de birefringence contrôlée électriquement. Les documents IEEE Transactions ou Electron Devices, volume ED 21 - mai 74 et Japan Abstracts of Japan, volume 2 - n° 17 - page 1038 et JP A 52133781 montrent des dispositifs associant des cellules dont l'une permet la modulation de couleur.

L'objet de l'invention est de proposer un dispositif à cristal liquide du type BCE à taux de multiplexage élevé permettant l'affichage d'informations en couleurs et nécessitant des niveaux de tensions relativement bas.

Le dispositif est caractérisé en ce qu'au moins deux cellules élémentaires renferment toutes deux un cristal liquide à effet de birefringence contrôlée électriquement, l'une de ces deux cellules élémentaires comportant deux réseaux matriciels croisés d'électrodes transparentes respectivement disposées sur les faces internes des deux plaques de cette cellule, lesdits réseaux étant soumis à un adressage électronique multiplex d'un niveau de tensions tel qu'on produit un affichage d'information visible en noir et blanc, et la seconde cellule élémentaire comportant deux électrodes transparentes planes disposées sur les faces internes des deux plaques de cette cellule, ces deux électrodes étant soumises à l'application d'une tension électrique rendant l'information affichée par la première cellule visible en couleur.

D'autres caractéristiques et avantages de l'invention apparaîtront dans la description qui suit, d'exemples de réalisation non limitatifs et illustrée par

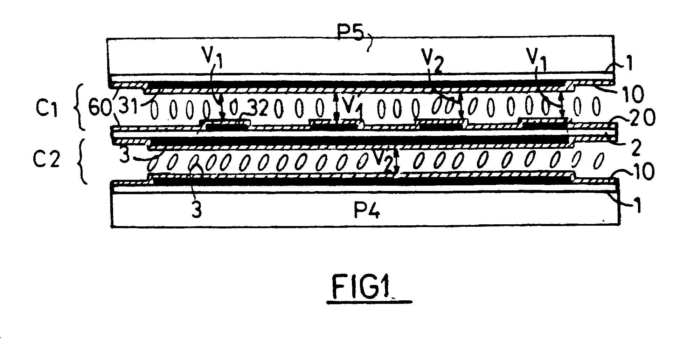

- la figure 1 est un mode de réalisation d'un dispositif d'affichage multiplexé en couleurs selon l'invention.

La figure 1 montre un mode de réalisation d'une autre caractéristique de l'invention, constituée par un dispositif multicouche à cristal liquide nématique à effet BCE, permettant l'affichage d'informations multiplexées en couleurs, en utilisant des niveaux de tensions relativement faibles.

Ce dispositif d'affichage électro-optique comprend au moins deux cellules élémentaires $C_1$ et $C_2$, constituées chacune par au moins deux plaques transparentes 1 et 2 sensiblement parallèles, entre lesquelles est emprisonné le cristal liquide, ces plaques étant empilées l'une contre l'autre. Deux polariseurs $P_4$ et $P_5$, par exemple rectilignes croisés, sont placés de part et d'autre des faces externes du dispositif.

La cellule $C_1$ comporte deux réseaux matriciels 31 et 32 croisés d'électrodes transparentes disposés sur les faces internes 10 et 20 des deux plaques 1 et 2 en regard respectivement, chaque élément d'affichage étant à l'intersection d'une électrode du réseau 31 et d'une électrode du réseau 32. Les deux réseaux d'électrodes sont susceptibles d'être soumis à l'application de séquences électriques de niveaux tels que les informations apparaîtraient par exemple en noir et blanc sans la cellule $C_2$.

La cellule $C_2$ comporte deux électrodes planes transparentes disposées en regard l'une de l'autre sur une partie ou la totalité des faces internes 10 et 20 des deux plaques 1 et 2 qui la constituent. Ces deux électrodes étant susceptibles d'être soumises à une tension électrique $V'_2$ telle que la cellule apparaîtrait par exemple à la limite de l'apparition des couleurs, soit la couleur jaune, qui est la première couleur obtenur après le blanc quand on augmente la tension d'excitation des électrodes, si cette cellule était unique. Les cellules $C_1$ et $C_2$ étant simultanément commandées électroniquement, les effets s'ajoutent et les éléments d'affichage définis par les réseaux d'électrodes de la cellule $C_1$ apparaissent en couleurs.

Ce mode de réalisation présente l'avantage d'obtenir des informations en couleurs sur un écran matriciel, avec des niveaux de tensions d'excitation qui sont ceux d'un écran matriciel noir et blanc fonctionnant avec le même taux de multiplexage. Un écran couleur matriciel actuel, monocouche, nécessite, à taux de multiplexage relativement élevé, des tensions d'excitation supérieures à 25V environ, obligeant à utiliser, pour la réalisation du circuit électronique de commande des réseaux matriciels de l'écran, des composants CMOS. Un écran couleurs matriciel selon l'invention permet l'utilisation de composants CMOS pour des taux de multiplexage plus élevés.

Selon une variante de réalisation de cette cellule d'affichage matriciel en couleurs, on peut combiner plusieurs couleurs en réalisant différentes zones d'électrodes de la cellule $C_2$, chaque zone étant excitée par une valeur de tension appropriée à la couleur désirée.

Le mélange de cristal liquide est à anisotropie diélectrique négative, le procédé d'alignemant des molécules, au niveau de la surface des plaques de verre, est préférentiellement tel que l'alignement est homéotrope (perpendiculaire à la surface) ou quasi-homéotrope c'est-à-dire présentant un faible angle par rapport à la normale. Cet angle dit angle de "tilt" par rapport à la normale permet de contrôler le plan de basculement des molécules lorsqu'un champ électrique E est créé par application d'une tension entre les électrodes des deux plaques.

Le procédé d'alignement des molécules du cristal au repos doit permettre préférentiellement un alignement soit homéotrope soit quasi-homéotrope. On peut obtenir un alignement homéotrope par l'utilisation d'un surfactant comme la lécithine ou d'un agent d'alignement de la famille des silanes. Dans cette dernière catégorie on peut donner comme exemple un produit commercialisé par la firme Japonnaise Chisso Co sous le nom DMOAP. Un alignement quasi-homéotrope peut être obtenu en déposant par évaporation sous l'incidence oblique une couche mince (environ 20 nm) du monoxyde de silicium suivie d'une étape de frottement et de traitement avec la lécithine ou le DMOAP.

## Revendications

1. Dispositif d'affichage électro-optique à cristal liquide du type comprenant plusieurs cellules élémentaires ($C_1$, $C_2$) constituées chacune par au moins deux plaques transparentes (1, 2) sensiblement parallèles comportant des électrodes transparentes entre lesquelles est emprisonné un cristal liquide, ces cellules étant empilées les unes contre les autres entre deux polariseurs rectilignes (P₄, P₅) situés de part et d'autre des faces externes de l'empilement, au moins le cristal liquide de l'une d'elles présentant un effet de birefringence contrôlée électriquement, ledit dispositif étant **caractérisé** en ce qu'au moins deux cellules élémentaires (C₁, C₂) renferment toutes deux un cristal liquide à effet de birefringence contrôlée électriquement, l'une (C₁) de ces deux cellules élémentaires comportant deux réseaux matriciels croisés (31,32) d'électrodes transparentes respectivement disposées sur les faces internes (10, 20) des deux plaques (1, 2) de cette cellule, lesdits réseaux étant soumis à un adressage électronique multiplex d'un niveau de tensions tel qu'on produit un affichage d'information visible en noir et blanc, et la seconde cellule élémentaire (C₂) comportant deux électrodes transparentes (3) planes disposées sur les faces internes (10, 20) des deux plaques (1, 2) de cette cellule, ces deux électrodes (3) étant soumises à l'application d'une tension électrique rendant l'information affichée par la première cellule (C1) visible en couleur.

2. Dispositif selon la revendication 1 caractérisé en ce que deux cellules élémentaires consécutives ont une plaque de verre (2) en commun, sur les faces de laquelle sont déposés les réseaux d'électrodes de chaque cellule.

## Claims

1. A liquid crystal electro-optical display device of the type comprising a plurality of elementary cells (C₁, C₂) each formed by at least two substantially parallel transparent plates (1, 2) comprising transparent electrodes between which a liquid crystal is trapped, said cells being stacked one against the other between two rectilinear polarisers (P₄, P₅) disposed on respective sides of the external faces of the stack, at least the liquid crystal of one thereof having an electrically controlled birefringence effect, said device being characterised in that at least two elementary cells (C₁, C₂) both contain a liquid crystal with an electrically controlled birefrigence effect, one (C₁) of said two elementary cells comprising two crossed matrix systems (31, 32) of transparent electrodes respectively disposed on the internal faces (10, 20) of the two plates (1, 2) of said cell, said systems being subjected to multiplex electronic addressing of a level of voltages such as to produce a visible information display in black and white, and the second elementary cell (C₂) comprising two flat transparent electrodes (3) disposed on the internal faces (10, 20) of the two plates (1, 2) of said cell, said two electrodes (3) being subjected to the application of an electrical voltage rendering the information displayed by the first cell (C₁) visible in colour.

2. A device according to claim 1 characterised in that two consecutive elementary cells have a glass plate (2) in common, on the faces of which are deposited the system of electrodes of each cell.

## Patentansprüche

1. Elektro-optische Flüssigkristall-Anzeigevorrichtung, die mehrere Elementarzellen (C₁, C₂) aufweist, deren jede aus wenigstens zwei transparenten im wesentlichen parallelen Platten (1, 2) besteht, welche transparente Elektroden tragen, zwischen denen ein Flüssigkristall eingeschlossen ist, wobei die Zellen aufeinandergestapelt sind und sich zwischen zwei linearen Polarisatoren (P₄, P₅) befinden, die beidseits der Außenflächen des Zellenstapels angeordnet sind und wobei der Flüssigkristall wenigstens einer Zelle eine elektrisch gesteuerte Doppelbrechung aufweist, dadurch gekennzeichnet, daß wenigstens zwei Elementarzellen (C₁, C₂) jeweils einen Flüssigkristall mit elektrisch gesteuerter Doppelbrechung enthalten, wobei eine (C₁) der beiden Elementarzellen zwei gekreuzte matrixförmige Netze (31, 32) von transparenten Elektroden aufweist, die auf den Innenflächen (10, 20) der beiden Platten (1, 2) dieser Zelle aufgebracht sind und die mit solchen Spannungswerten im elektronischen Multiplexverfahren beaufschlagt werden, daß eine sichtbare Schwarz/Weiß-Anzeige von Informationen entsteht und wobei die zweite Elementarzelle (C₂) zwei ebene transparente Elektroden (3) aufweist, die auf den Innenflächen (10, 20) der beiden Platten (1, 2) dieser Zelle aufgebracht sind, wobei die beiden Elektroden (3) mit einer elektrischen Spannung beaufschlagt werden, welche die von der ersten Zelle (C₁) angezeigte Information farbig erscheinen läßt.

2. Vorrichtung nach Anspruch 1, dadurch gekennzeichnet, daß die beiden aufeinanderfolgenden Elementarzellen eine gemeinsame Glasplatte (2) aufweisen, auf deren Flächen die Elektrodennetze einer jeden Zelle aufgebracht sind.

FIG1